# EUROPÄISCHE PATENTSCHRIFT

(11) **EP 2 676 306 B1**
(45) Veröffentlichungstag und Bekanntmachung des Hinweises auf die Patenterteilung: **20.04.2016**
(21) Anmeldenummer: 11808617.2
(22) Anmeldetag: 16.12.2011
(51) Int. Cl.: H01M 2/02, H01M 10/02, H01M 10/04, H01M 10/0525, H01M 2/12

(54) **LITHIUM-IONEN AKKUMULATOR**
LITHIUM-ION RECHARGEABLE BATTERY
ACCUMULATEUR LITHIUM-ION

(30) Priorität: 15.02.2011 DE 102011004092; 17.03.2011 DE 102011005681
(43) Veröffentlichungstag der Anmeldung: 25.12.2013
(73) Patentinhaber: Robert Bosch GmbH, 70442 Stuttgart (DE)
(72) Erfinder: SCHUMANN, Bernd, 71277 Rutesheim (DE); BABA, Niluefer, 70499 Stuttgart (DE)
(86) Internationale Anmeldenummer: PCT/EP2011/073013
(87) Internationale Veröffentlichungsnummer: WO 2012/110141

(56) Entgegenhaltungen:
- WO-A1-2010/094311
- US-A- 6 040 085
- US-A1- 2008 124 625
- US-A1- 2009 077 794

## Beschreibung

Die vorliegende Erfindung betrifft einen Lithium-Ionen Akkumulator sowie ein Verfahren zur Anordnung eines Wickels oder Stapels eines Lithium-Ionen Akkumulators in einem Gehäuse. Insbesondere betrifft die vorliegende Erfindung einen Lithium-Ionen Akkumulator, welcher ein Gehäuse und einen in dem Gehäuse angeordneten Wickel oder Stapel aufweist, wobei der Wickel oder Stapel im wesentlichen aus zumindest einer Kathode, zumindest einer Anode, zumindest einem Separator und zumindest einem zwischen der Kathode und der Anode angeordneten nicht wässrigen Elektrolyten besteht, wobei die Kathode, die Anode, der Separator und der zumindest der zwischen der Kathode und der Anode angeordnete Elektrolyt schichtweise angeordnete sind, welcher dadurch gekennzeichnet ist, dass der Akkumulator ein Federelement aufweist, dessen Federkraft die Kathode, die Anode, den Separator sowie den Elektrolyten zumindest in Teilbereichen des Akkumulators im normalen Betriebszustand aneinander presst.

### Stand der Technik

Lithium-Ionen-Batterien bzw. Akkumulatoren werden heutzutage in einer Vielzahl von Produkten als Energiespeicher eingesetzt. Bekannt ist die Verwendung solcher Energiespeicher beispielsweise im Bereich der tragbaren Computersysteme oder der Telekommunikation. Intensiv wird aktuell auch ihr Einsatz im Automotiv-Bereich als Antriebsbatterie in Kraftfahrzeugen diskutiert. Speziell hier, aber auch in anderen Anwendungsgebieten ist die Sicherheit dieser Lithium-Ionen Akkumulatoren von zentraler Bedeutung. Durch Schadensfälle, welche auch das Interesse der Medien erregt haben, wie beispielsweise das Durchbrennen von Laptop-Akkumulatoren, ist das Thema Sicherheit von Lithium-Ionen-Akkumulatoren ein kritischer Faktor für die Massenanwendung dieser Technologie auch in anderen Bereichen der Technik. Ein thermisches Durchgehen von Lithium-Ionen Zellen muss im praktischen Einsatz unbedingt vermieden werden. Aktuelle und zukünf-Energiespeicher auf Lithium-Ionen-Technologie sind bereits mit einer Reihe von Sicherheitsmechanismen ausgestattet. Unter anderem sind Sicherheitsventile vorgesehen, welche bei Überdruck in der Zelle ein Abblasen dieses Überdrucks nach außen ermöglichen. Diese Ventile können beispielsweise als Berstscheibe oder als Druckrelease-Ventil ausgeführt sein. Während im Bereich der Tragbaren Computersysteme oder der Telekommunikation Akkumulatoren nur aus einer oder einigen wenigen verbundenen Lithium-Ionen-Zellen gebildet werden, müssen in Bereichen, in denen höhere Ströme, Spannungen und/oder elektrische Ladungen benötigt werden, deutlich mehr Zellen zusammengeschlossen werden. So müssen beispielsweise für Anwendungen im Automotiv-Bereich bis zu mehrere Hundert Lithium-Ionen-Zellen zu einer Batterie zusammengeschlossen werden, welche dann zusammen einen entsprechend leistungsstarken Akkumulator bilden. Hier sind ergänzende Sicherheitsmaßnahmen notwendig, um Sicherheitskonzepte an eine solche Nutzung anzupassen bzw. zu verbessern.

WO 2010/094311 A1 offenbart eine galvanische Zelle von im wesentlichen prismatischer Gestalt weist einen Elektrodenstapel mit wenigstens einer Anode, einer Kathode und einen Separator auf. Der Separator ist vorgesehen, einen Elektrolyt wenigstens teilweise aufzunehmen. Weiter weist die galvanische Zelle wenigstens zwei Gehäuseteile auf, welche den Elektrodenstapel wenigstens teilweise umschließen. Wenigstens eine Verbindungsnaht verbindet die wenigstens zwei Gehäuseteile wenigstens streckenweise. Die galvanische Zelle ist dadurch gekennzeichnet, dass die wenigstens eine Verbindungsnaht dehnbar ausgestaltet ist.

US 6,040,085 offenbart eine Vorrichtung und ein Verfahren zur außendruckunabhängigen Kompression einer elektrochemischen Zelle.

US 2009/0077794 A1 offenbart einen Akkumulator; in welchem einen positive und einen negative Elektorde spiralförmig mit einem zwischen ihnen angeordneten Separator gewickelt sind. Im Zentrum des Wickels ist ein Federelement angeordnet, welches eine Federkraft auf den Wickel ausübt.

US 2008/0124625 A1 offenbart ein Gehäuse für eine bipolare Batterie mit mehreren in einem Stapel angeordneten Elektroden, wobei das Gehäuse im geschlossenen Zustand einen Druck auf den gebildeten Elektrodenstapel ausübt, wodurch dieser zusammengedrückt wird.

### Offenbarung der Erfindung

Das zuvor Ausgeführte berücksichtigend, ist es die Aufgabe der vorliegenden Erfindung einen Lithium-Ionen Akkumulator anzugeben, welcher insbesondere einen verbesserten Schutz bei thermischer Überlastung des Akkumulators aufweist.

Gelöst wird diese Aufgabe durch die in Anspruch 1 genannten Merkmale.

Durch die erfindungsgemäße Ausgestaltung eines Lithium-Ionen Akkumulators kann einer Delamination des Stapels entgegengewirkt werden. Das Federelement sorgt dabei für einen gleichmäßigen Andruck der einzelnen Komponenten des Stapels (Kathode, Anode, Separator und Elektrolyt). Gleichzeitig ermöglicht das Federelement eine Volumenausdehnung des Stapels, wie er durch eine beim Betrieb des Akkumulators übliche Erwärmung oder durch die elektrochemischen Reaktionen auftreten kann. Einer Delamination des Stapels durch eine Volumenkontraktion nach Abkühlung oder Ladezustandsänderung wirkt die Federkraft des Federelementes entgegen. Das Federelement ist vorzugsweise so ausgelegt, dass während des Normalbetriebs der Zelle bzw. des Akkumulators zu jedem Zeitpunkt eine gleiche Anpresskraft auf die Komponenten des Akkumulators wirkt. Hierdurch kann eine vorzeitige Alterung des Akkumulators vermieden werden.

In einer Ausgestaltung des erfindungsgemäßen Lithium-Ionen Akkumulators stützt sich das Federelement gegenüber dem Gehäuse ab. Hierdurch kann die Zelle kompakt Ausgestaltet werden und dem Federelemente wird ein hinreichendes Widerlager zur Ausübung der Federkraft geboten.

In einer weiteren bevorzugten Ausgestaltung des erfindungsgemäßen Akkumulators stützt sich das Federelement über eine Sollbruchstelle stoffschlüssig gegenüber dem Gehäuse. Vorzugsweise öffnet die Sollbruchstelle bei Überschreitung einer definierten Kraft und/oder Temperatur den Stoffschluss zwischen Gehäuse und Federelement und die durch das Federelement auf den Stapel einwirkende Federkraft löst sich.

Hierdurch kann bei Erreichen eines kritischen Betriebszustandes eine gezielte Delamination des Wickels oder Stapels erfolgen, wodurch ein Abschalten der einzelnen Zelle möglich wird. Insbesondere wenn durch einen Kurzschluss der Wickel oder Stapel unter Gasdruck gerät, wie etwa durch thermische oder chemische Zersetzung des Elektrolyten, kann eine Ausdehnung des Stapels stattfinden, sofern die definierten Haltekräfte des Stoffschlusses der Sollbruchstelle zwischen Federelement und Gehäuse überschritten werden. Hierdurch wird zum einen ein verbessertes Abkühlen der im kritischen Betriebszustand befindlichen Akkumulatorzelle erreicht, zum anderen können die ggf. bereits gebildeten Gase entwichen. Es hat sich gezeigt, dass das beim thermischen Durchbrennen eines Lithium-Ionen Akkumulators gebildeten Gase selbst an weiteren chemischen Reaktionen teilnehmen können, die zu einer weiteren Erhöhung des Gasdruckes innerhalb der Akkumulatorzelle beitragen können. Adiabatische Kalorimeteruntersuchungen an Standard-Elektrolyten haben gezeigt, dass ein erheblicher Anteil des Gesamtdruckanstieges beim thermischen Durchgehen einer Akkumulatorzelle auf die genannten Elektrolytreaktionen zurückzuführen ist. Durch das erfindungsgemäß ermöglichte Entweichen der Reaktionsgase wird somit ein weiterer Anstieg des Gasdruckes durch Weiterreaktion dieser Reaktionsgase vermieden. Ein thermisches Durchgehen von Akkumulatorzellen beim Erreichen eines kritischen Betriebszustandes kann somit reduziert oder sogar verhindert werden. Hierdurch wird die Sicherheit des Akkumulators deutlich gesteigert.

In einer weiteren Ausgestaltung des erfindungsgemäßen Akkumulators ist das Federelement integraler Bestandteil des Gehäuses. Hierzu kann beispielsweise ein Gehäuseteilabschnitt feder- oder wellenförmig ausgebildet sein, so dass die Federkraft über das gesamte Gehäuse gleichmäßig auf den Stapel einwirkt. Hierdurch kann eine noch kompaktere Bauform erreicht werden. In einer weiteren Ausgestaltung der Erfindung ist das Gehäuse insgesamt wellenförmig ausgebildet und kann so in seiner Gesamtheit als Federelement dienen, welches einerseits eine hinreichende Federkraft zum anpressen der einzelnen Komponenten des Stapels, andererseits eine hinreichende Elastizität zur Aufnahme der durch die elektrochemische Reaktion oder Erwärmung bedingte Volumenausdehnung des Stapels aufweist.

Erfindungsgemäß weist der Akkumulator zumindest einen Stapel sowie ein oberes Federelement und ein unteres Federelement auf, welche an dem Gehäuse jeweils über eine stoffschlüssige Sollbruchstelle fest-legbar sind, wobei der Stoffschluss zwischen Gehäuse und Federelement an der Sollbruchstelle bei Überschreitung einer definierten Kraft und/oder Temperatur lösbar ist. Hierdurch wird eine optimierte Anpassung der erfindungsgemäßen Idee an eine als Stapel ausgeführte Akkumulatorzelle erreicht.

Erfindungsgemäß weist der Stapel eine Mehrzahl von Schichten auf, welche untereinander mit einem Federelement verbindbar sind, wobei die Federkraft des Federelementes in wesentlichen entgegen der Federkraft des oberen und unteren Federelementes wirkt. Bei Überschreitung Sollbruchkraft der Sollbruchstelle zwischen Federelement und Gehäuse wirkt die Federkraft des die Schichten miteinander verbindenden Federelementes so, dass die Schichten auseinandergezogen werden. Hierdurch wird die Wärmeabfuhr zwischen den Schichten verbessert, was ein schnelleres Abkühlen der Schichten auf eine unterkritische Temperatur ermöglicht.

Weiterhin wird ein nicht erfindungsgemäßes Verfahren zur Anordnung eines Wickels oder Stapels eines Lithium-Ionen Akkumulators in einem Gehäuse angegeben, wobei der Wickel oder Stapel im wesentlichen aus zu- H mindest einer Kathode, zumindest einer Anode, zumindest einem Separator und zumindest einem zwischen der Kathode und der Anode angeordneten nicht wässrigen Elektrolyten besteht, wobei Kathode, Anode, Separator und zumindest der zwischen der Kathode und der Anode angeordnete Elektrolyt schichtweise angeordnete werden, welches dadurch gekennzeichnet ist, dass die Kathode, die Anode, der Separator sowie der Elektrolyten zumindest in Teilbereichen des Wickels oder Stapels im normalen Betriebszustand des Akkumulators mittels eines Federelementes aneinander gepresst werden.

In einer bevorzugten Ausgestaltung des nicht erfindungsgemäßen Verfahrens wird dabei das Federelement über eine Sollbruchstelle stoffschlüssig gegenüber dem Gehäuse abgestützt wird, wobei die Sollbruchstelle derart ausgebildet wird, dass diese bei Überschreitung einer definierten Kraft und/oder Temperatur den Stoffschluss zwischen Gehäuse und Federelement öffnet und die durch das Federelement auf den Wickel oder Stapel einwirkende Federkraft löst.

Die Erfindung wird im Folgenden anhand eines Ausführungsbeispiels sowie einer Figur näher erläutert.
Fig. 1 zeigt eine schematische Darstellung eines Lithium-Ionen Akkumulators;
Fig. 2 zeigt eine Ausführung eines Akkumulators, bei welchem mehrere Wickel nebeneinander angeordnet sind;
Fig. 3 zeigt eine Ausführung eines Akkumulators, bei welchem mehrere Wickel nebeneinander angeordnet sind, bei welche die Wickel von einem gemeinsamen Gehäuse umfasst werden;
Fig. 4 zeigt unterschiedliche Ausführungsformen Akkumulatoren;
Fig. 5 zeigt einen stapelförmig aufgebauten Lithium-Ionen Akkumulator gemäß der Erfindung in normalen Betriebszustand; und
Fig. 6 zeigt den Lithium-Ionen Akkumulator gemäß Fig. 5 nach Erreichen eines kritischen Betriebszustandes.

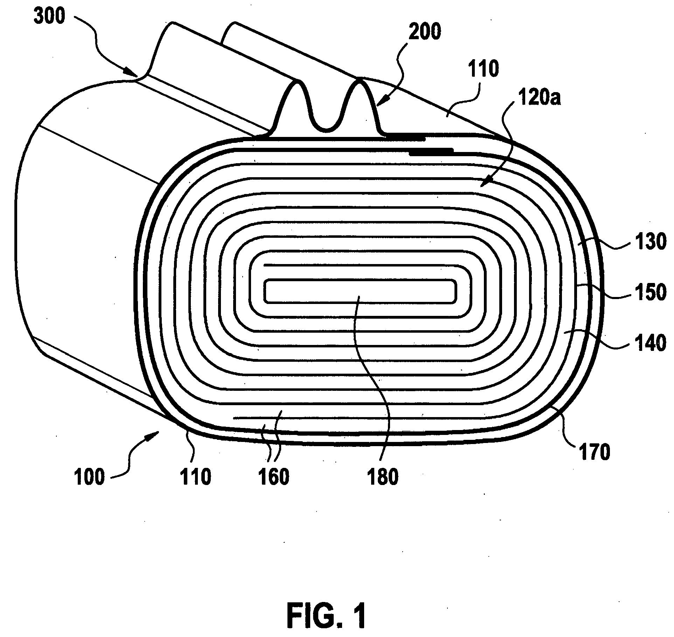

Fig. 1 zeigt eine schematische Darstellung eines Lithium-Ionen Akkumulators 100, aufweisend ein Gehäuse 110 und einen in dem Gehäuse 110 angeordneter Wickel 120a. Der Wickel 120a besteht im Wesentlichen aus zumindest einer Kathode 130, zumindest einer Anode 140, zumindest einem Separator 150 und zumindest einem zwischen der Kathode 130 und der Anode 140 angeordneten nicht wässrigen Elektrolyten 160, welche um einen in der Mitte des Wickels 120a angeordneten Zelldorn 180, welcher auch als Ableiter 180 ausgebildet sein kann, gewickelt werden. Zwischen Wickel 120a und Gehäuse 110 ist noch eine Gleitschicht 170 angeordnet, die für eine Reibungsminimierung der Innenwand des Gehäuses 110 und dem Wickel 120a Sorge trägt. Die Gleitschicht 170 kann dabei beispielsweise aus einer Kunststofffolie gebildet sein. Die Kathode 130, die Anode 140, der Separator 150 und der zwischen der Kathode 130 und der Anode 140 angeordnete Elektrolyt sind schichtweise angeordnet. Der Akkumulator 100 weist ein Federelement 200 auf, dessen Federkraft die Kathode 130, die Anode 140, den Separator 150 sowie den Elektrolyten 160 zumindest in Teilbereichen des Akkumulators 100 im normalen Betriebszustand aneinander presst. Hierzu ist das Federelement 200 mit dem Gehäuse derart verbunden, dass das Gehäuse 110 in der Art einer Metallklammer den Wickel 120a umfasst, wobei das Gehäuse 110 nicht nur als Umhüllungsmantel sondern auch als Akkumulator- oder Zellgehäuse ausgebildet sein, wobei in letzteren beiden Fällen der Boden und Deckel entsprechend elastisch bzw. federnd ausgebildet sein muss, um die Dichtigkeit des Akkumulator- oder Zellgehäuses zu gewährleisten. Diese Umfassung übt einen bestimmten Druck auf den Wickel 120a aus, der die Funktion der guten Auflage der einzelnen Schichten (130, 140, 150, 160) des Wickels 120a unterstützt. Gleichermaßen kann durch die so gebildete elastisch federnde Umhüllung der Wickel 120a sich gemäß seiner elektrochemischen Funktion ausdehnen und zusammenziehen, so wie es den Dimensionsänderungen der sich entladenden oder aufgeladenen Zelle entspricht, ohne dass nicht eingeplante Kräfte oder Kräfte unzweckmäßiger Größe auftreten, welche den Wickel 120a lokal einer erhöhten Kraft und/oder mechanischen Verspannung im Sichtverbund aussetzten. Das Federelement 200 stützt sich gegenüber dem Gehäuse 110 ab. Bevorzugt erfolgt diese Abstützung über eine als Sollbruchstelle 300 stoffschlüssig ausgeführte Verbindung der Federelements 200 zum Gehäuse 110. Die Sollbruchstelle 300 ist derart ausgeführt, dass bei Überschreitung einer definierten Kraft und/oder Temperatur der Stoffschluss zwischen Gehäuse 110 und Federelement 200 geöffnet wird, wodurch sich die durch das Federelement 200 auf den Wickel 120a einwirkende Federkraft löst. Zum Stoffschluss zwischen Federelement 200 und Gehäuse 110 sind beispielsweise ein Temperaturlot oder ein thermischer Schmelzkontakt geeignet, welche sowohl bei Überschreitung einer bestimmten Temperatur als auch bei Überschreitung einer bestimmten Kraft aufbrechen und so den Stoffschluss lösen können. Im sicherheitskritischen Zustand des Akkumulators 100 wird infolge der auftretenden hohen Temperatur oder Kraft der Kontakt des Federelementes 200 mit dem Gehäuse 110 gelöst. Das Federelement 200 entspannt sich. Die Entspannung des Federelements 200 führt zumindest teilweise zu einer Auftrennung des Wickels 120a, so dass sich die einzelnen Schichten (130, 140, 150, 160) voneinander lösen. Die seinerseits führt zu einer rascheren Kühlung des Wickels 120a und damit zur Überführung der Zelle in einen sicheren Endzustand. Reaktionsgase bzw. Elektrolytdämpfe können auf diese Weise ebenfalls einfacher entweichen, womit sie für eine Zweiterreaktion nicht mehr zur Verfügung stehen.

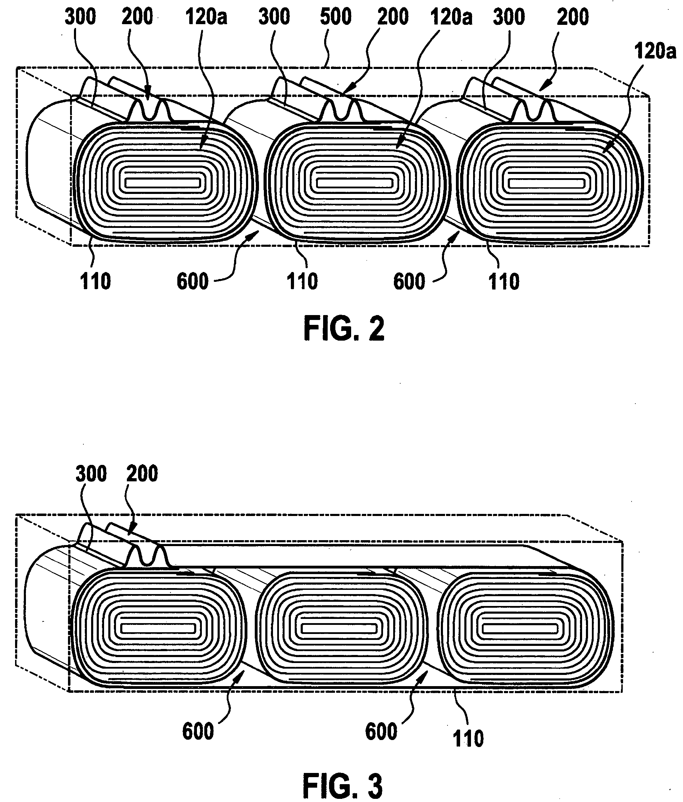

Fig. 2 zeigt einen Lithium-Ionen Akkumulator, bei welchem eine Mehrzahl von Wickeln 120a in einem gemeinsamen Gehäuse 500 untergebracht sind. Die einzelnen Wickel 120a entsprechen dabei in ihrem Aufbau den in Fig. 1 gezeigten Wickeln. Die Wickel 120a sind vorzugsweise derart in dem gemeinsamen Gehäuse 500 angeordnet, dass zwischen ihnen ein hinreichender Abstand 600 besteht, in welchen die einzelnen Wickel 120a bei Überschreitung kritischer Betriebsgrößen und auslösen der Sollbruchstelle 300 expandieren können.

Fig. 3 zeigt eine Ausgestaltung eines Lithium-Ionen Akkumulators, bei welchem eine Mehrzahl von einzelnen Wickeln 120a von einem gemeinsamen Gehäuse 110 umfasst sind. Das Gehäuse 110 ist mit einem gemeinsamen Federelement 200 verbunden, welches in der zuvor beschriebenen Weise stoffschlüssig mit dem Gehäuse 110 verbunden ist. Bei Überschreitung kritischer Betriebsgrößen und Auslösen der Sollbruchstelle 300 expandieren in dem gemeinsamen Gehäuse 110 zusammengefasste Wickel 120a und versetzen den Zellverbund in einen sicheren Endzustand.

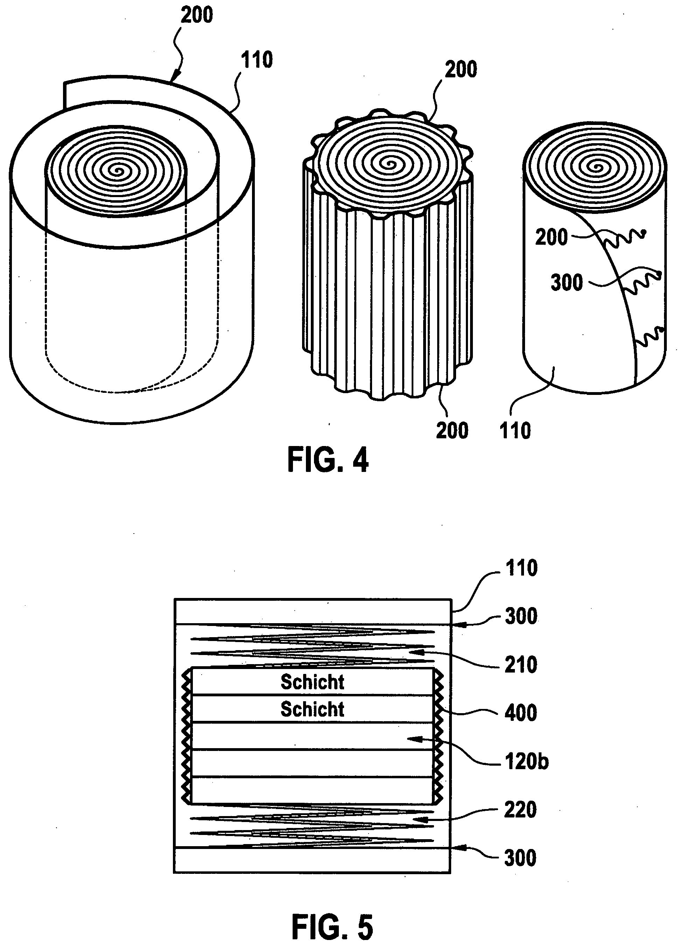

Fig. 4 zeigt unterschiedliche Ausgestaltungen eines Akkumulators. Die linke Abbildung in Fig. 4 zeigt ein Gehäuse 110, welches spiralförmig ausgebildet ist und somit insgesamt als Federelement 200 wirkt. Das Federelement 200 ist somit in der gezeigten Ausführungsform ein integraler Bestandteil des Gehäuses 110. Die mittlere Abbildung in Fig. 4 zeigt ebenfalls eine Aufführungsform eines erfindungsgemäßen Akkumulators, bei welchem Federelemente 200 integrale Bestandteile des Gehäuses 110 sind, welches vorliegend als Akkumulator- bzw. Zellgehäuse ausgebildet ist und aus Gründen der Übersichtlichkeit keinen Deckel aufweist. Hierzu sind die Federelemente als wellenförmige Ausbuchtungen im Gehäuse 110 ausgeführt, über welche das Gehäuse 110 entsprechend expandiert bzw. kontrahiert werden kann. Durch die Mehrzahl der durch die wellenförmigen Ausbuchtungen gebildeten Federelemente 200 und der durch diese Anordnung mögliche Aufsummierung der Federkräfte kann die Federkraft der einzelnen Elemente klein gehalten werden. Gleichzeitig wird eine gleichmäßige Verteilung der Federkraft über den gesamten Gehäuseradius erreicht. Mit der rechten Abbildung der Fig. 4 ist eine weitere Ausführungsform eines erfindungsgemäßen Akkumulators gezeigt, bei welchem Federelemente 200 über als Lötpunkte ausgeführte Sollbruchstellen 300 mit dem Gehäuse verbunden sind.

Fig. 5 zeigt eine Ausgestaltung eines erfindungsgemäßen Akkumulators mit zu einem Stapel 120b zusammengefassten Zellkomponenten. Auf den Stapel 120b wirken im normalen Betriebszustand ein oberes Federelement 210 und ein unteres Federelement 220 ein. Die Federelemente 210, 220 stützen sich über Sollbruchstellen 300 gegenüber dem Gehäuse 110 ab. Die einzelnen Schichten des Stapels 120b sind über ein als Verbindungselement dienendes weiteres Federelement 400 miteinander verbunden. Die Federkraft des Federelements 400 wirkt dabei der Federkraft der Federelemente 210, 220 entgegen. Im Normalbetrieb sorgt die Federkraft der Federelemente 210, 220 für ein gleichmäßiges Andrücken der Schichten des Stapels 120b.

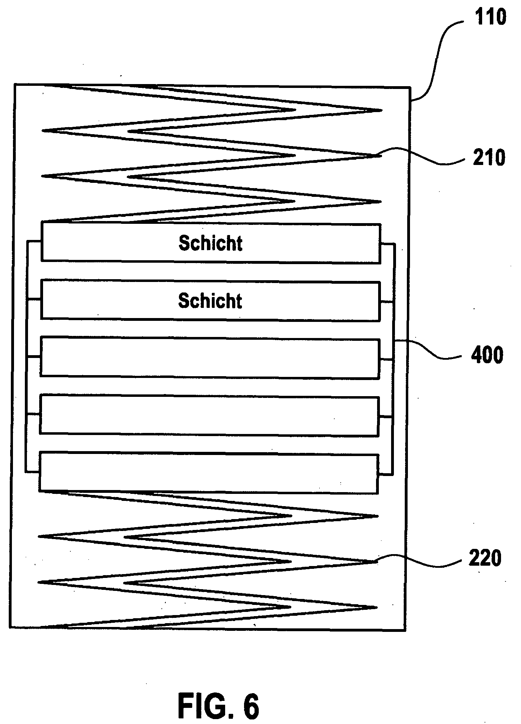

Fig. 6 zeigt die in Fig. 5 gezeigte Ausführungsform des erfindungsgemäßen Akkumulators nach Erreichen eines kritischen Betriebszustandes, bei welchem die Sollbruchstellen 300 den Stoffschluss zwischen den Federelementen 210, 220 und dem Gehäuse 110 gelöst haben. In diesem Betriebszustand überwiegt die Federkraft des Federelements 400 die Federkraft der Federelemente 210, 210, so dass die Schichten des Stapels 120b auseinandergezogen werden. Hierdurch ist ein schnelleres Abkühlen des Stapels 120b sowie ein Gasaustritt möglich, wodurch der Akkumulatorstapel in einen sicheren Zustand überführt werden kann. Die Gefahr eines weiteren thermischen Durchgehens ist somit nicht mehr gegeben.

## Patentansprüche

1. Lithium-Ionen Akkumulator (100), aufweisend ein Gehäuse (110) und einen in dem Gehäuse (110) angeordneten Stapel (120b), wobei der Stapel (120b) im wesentlichen aus zumindest einer Kathode (130), zumindest einer Anode (140), zumindest einem Separator (150) und zumindest einem zwischen der Kathode (130) und der Anode (140) angeordneten nicht wässrigen Elektrolyten (160) besteht, wobei Kathode (130), Anode (140), Separator (150) und zumindest der zwischen der Kathode (130) und der Anode (140) angeordnete Elektrolyt schichtweise angeordnet sind, wobei der Akkumulator ein Federelement (200) aufweist, dessen Federkraft die Kathode (130), die Anode (140), den Separator (150) sowie den Elektrolyten (160) zumindest in Teilbereichen des Akkumulators (100) im normalen Betriebszustand aneinander presst, **dadurch gekennzeichnet, dass** der Lithium-Ionen Akkumulator zumindest einen Stapel (120b) sowie ein oberes Federelement (210) und ein unteres Federelement (220) aufweist, welche an dem Gehäuse (110) jeweils über eine stoffschlüssige Sollbruchstelle (300) festgelegt sind, wobei der Stoffschluss zwischen Gehäuse (110) und Federelement (210, 220) an der Sollbruchstelle bei Überschreitung einer definierten Kraft und/oder Temperatur lösbar ist und wobei der Stapel (120b) eine Mehrzahl von Schichten (130, 140, 150, 160) aufweist, welche untereinander mit einem Federelement (400) verbunden sind, wobei die Federkraft des Federelementes (400) in wesentlichen entgegen der Federkraft des oberen und unteren Federelementes (210, 220) wirkt.

2. Lithium-Ionen Akkumulator nach Anspruch 1, **dadurch gekennzeichnet, dass** das Federelement (200) integraler Bestandteil des Gehäuses (110) ist.

3. Lithium-Ionen Akkumulator gemäß einem der Ansprüche 1 oder 2, **dadurch gekennzeichnet, dass** das Gehäuse (110) eine Sollbruchstelle (300) aufweist, welche bei Überschreitung einer definierten Kraft und/oder Temperatur das Gehäuse (110) öffnet und die durch das Gehäuse (110) auf den Stapel (120b) einwirkende Federkraft löst.

## Claims

1. Rechargeable lithium-ion battery (100), having a housing (110) and a stack (120b) which is arranged in the housing (110), wherein the stack (120b) substantially comprises at least one cathode (130), at least one anode (140), at least one separator (150) and at least one non-aqueous electrolyte (160) which is arranged between the cathode (130) and the anode (140), wherein the cathode (130), the anode (140), the separator (150) and at least the electrolyte which is arranged between the cathode (130) and the anode (140) are arranged in layers, wherein the rechargeable battery has a spring element (200), the spring force of the said spring element pressing the cathode (130), the anode (140), the separator (150) and also the electrolyte (160) against one another at least in subregions of the rechargeable battery (100) in the normal operating state, **characterized in that** the rechargeable lithium-ion battery has at least one stack (120b) and also an upper spring element (210) and a lower spring element (220) which are fixed to the housing (110) by means of a cohesive predetermined breaking point (300) in each case, wherein the cohesive connection between the housing (110) and the spring element (210, 220) at the predetermined breaking point can be released when a defined force and/or temperature is exceeded, and wherein the stack (120b) has a plurality of layers (130, 140, 150, 160) which are connected to one another by way of a spring element (400), wherein the spring force of the spring element (400) acts substantially against the spring force of the upper and the lower spring element (210, 220).

2. Rechargeable lithium-ion battery according to Claim 1, **characterized in that** the spring element (200) is an integral constituent part of the housing (110).

3. Rechargeable lithium-ion battery according to either of Claims 1 and 2, **characterized in that** the housing (110) has a predetermined breaking point (300) which, when a defined force and/or temperature is exceeded, opens the housing (110) and releases the spring force which acts on the stack (120b) by way of the housing (110).

## Revendications

1. Accumulateur lithium-ion (100), présentant un boîtier (110) et un empilement (120b) disposé dans le boîtier (110), l'empilement (120b) se composant essentiellement d'au moins une cathode (130), d'au moins une anode (140), d'au moins un séparateur (150) et d'au moins un électrolyte non aqueux (160) disposé entre la cathode (130) et l'anode (140), la cathode (130), l'anode (140), le séparateur (150) et au moins un électrolyte disposé entre la cathode (130) et l'anode (140) étant disposés en couches, l'accumulateur présentant un élément de ressort (200), dont la force de ressort presse les uns contre les autres la cathode (130), l'anode (140), le séparateur (150) ainsi que l'électrolyte (160) au moins dans des régions partielles de l'accumulateur (100) dans un état de fonctionnement normal, **caractérisé en ce que** l'accumulateur lithium-ion présente au moins un empilement (120b) ainsi qu'un élément de ressort supérieur (210) et un élément de ressort inférieur (220), qui peuvent être fixés au boîtier (110) à chaque fois par le biais d'une zone destinée à la rupture avec engagement par liaison de matière (300), l'engagement par liaison de matière entre le boîtier (110) et l'élément de ressort (210, 220) au niveau de la zone destinée à la rupture pouvant être détaché en surmontant une force définie et/ou une température définie et l'empilement (120b) présentant une pluralité de couches (130, 140, 150, 160) qui sont connectées les unes aux autres par un élément de ressort (400), la force de ressort de l'élément de ressort (400) agissant essentiellement à l'encontre de la force de ressort de l'élément de ressort supérieur et de l'élément de ressort inférieur (210, 220).

2. Accumulateur lithium-ion selon la revendication 1, **caractérisé en ce que** l'élément de ressort (200) fait partie intégrante du boîtier (110).

3. Accumulateur lithium-ion selon l'une quelconque des revendications 1 ou 2, **caractérisé en ce que** le boîtier (110) présente une zone destinée à la rupture (300) qui, lors du dépassement d'une force définie et/ou d'une température définie, ouvre le boîtier (110) et relâche la force de ressort agissant par le boîtier (110) sur l'empilement (120b).
